# EUROPEAN PATENT APPLICATION

(11) **EP 4 718 048 A1**
(43) Date of publication of application: **01.04.2026**
(21) Application number: 24203653.1
(22) Date of filing: 30.09.2024
(51) Int. Cl.: G01M 3/00, G01M 3/38, G01J 5/00, G06V 20/10

(54) **SATELLITE BASED LEAK DETECTION ON ROOFS OF A BUILDING**

(71) Applicant: Sika Technology AG, 6340 Baar (CH)
(72) Inventor: CARL, Wilfried, 8048 Zürich (CH)
(74) Representative: Sika Patent Attorneys

(57) **Abstract**

The invention relates to a method for leak detection on roofs of a building, comprising the following steps:
- defining a location of a monitored roof;
- acquiring satellite-based thermal infrared pictures of the location of the monitored roof at a selected surveyance time;
- evaluating the satellite-based thermal infrared pictures for leak detection.

## Description

### Technical field

The present invention relates to a method for leak detection on roofs of a building, in particular to a satellite based detection method.

### Background of the invention

The main purpose of a roof is to protect the building and its contents from water. Therefore, leak detection is one of the most important "add-on" functionalities for a building.

The commonly used conventional leak detection method is based on a variety of moisture content sensor technologies. This method works by monitoring a change in a physical property. Besides the electrical resistance for embodied sensors, the physical property can be capacitance, optical properties, electromagnetic properties, etc.

However, each sensor has its limitations. For example, the gravimetric plugs cannot be conductive to automation and lead to a destructive measurement; Thermal capacitance has a questionable accuracy; Electrical resistance requires calibrations and electrical interference affects the measurement.

In addition, all the sensors need to be installed and set up, which render the leak detect using sensor more complex. In particular, installation of embedded moisture sensors requires power supply, either by a permanent supply or by a battery. While permanent power supply is rarely available on typical roofs, use of batteries requires regular change, which can be very difficult for embedded systems. Furthermore, it is often not possible to guarantee the proper function of embedded electronic parts over the full lifetime of a modern roof, which is in excess of 20 years.

To avoid the drawbacks of sensor installation, two methods have been conceptualized. The first one is using equipment to measure the dielectric constant of the insulation that depends on the presence of moisture. Nevertheless, this method requires a close contact between the roof surface and the measuring equipment, for which manual work to place and to fix the measuring equipment in the desired location of a roof is necessary. The method is also sensitive towards several disturbing factors, such as temperature variations or roof surface roughness. Moreover, the signal is weak and depends strongly on the dielectric properties of the membrane of roofs.

The second one is taking thermal infrared pictures and reviewing the pictures to detecting the change of heat capacity by a wet insulation. Com-pared to a dry roof, a wet insulation leads to a delayed heating up or cooling down. This method, however, requires the complex and expensive infra-red thermal imaging equipment. Furthermore, this method works best during heating and/or cooling phases of a day, which means that detection is typically carried out after sunrise or sunset. Thus, inspection by hand held devices or drones in the dark is required, which imposes serious limitation regarding safety.

The present invention is made in view of the problems above.

### Summary of the invention

It is an object of the present invention to provide a reliable, robust, non-destructive, and cost-efficient method for detecting moisture in roof structures.

According to the invention, this object is achieved by the subject matter of claim 1.

In particular, the method for leak detection on roofs of a building according to the present invention comprises a step of defining a location of a monitored roof, a step of acquiring satellite-based thermal infrared pictures of the location of the monitored roof at a selected surveyance time, and a step of evaluating the satellite-based thermal infrared pictures for leak detection.

It has surprisingly been found that combination of satellite based infrared images with locations (GPS-data) of roofs leads to a very convenient and safe way of leak detection, where the satellite based infrared images of the location of the monitored roof can be acquired from the internet. Firstly, this method enables a direct detection of moisture in the roof structure. Secondly, using this method. virtually no effort for roof inspection is required. In particular, no complex and expensive equipment, and no inspection or drone flight in the dark are required.

The method according to the invention is a simple method for non-destructive detection of moisture in roof structures. In contrast to comparable moisture sensor based methods, no electricity or sensor maintenance is required. The invention, which relies fully on evolution of existing data, provides a reliable and cost efficient method for leak detection.

Advantageous embodiments of the invention are specified in the dependent claims.

### Brief description of drawings

FIG. 1 is a flow chart showing an overview of leak detection method according to a preferred embodiment of the invention.
FIG. 2 illustrates an exemplary thermal infrared picture in which there is no leakage in the monitored roof.
FIG. 3 illustrates an exemplary thermal infrared picture in which there is a leakage, and temperature variation is a temperature difference between different areas of the monitored roof in one picture.
FIG. 4 illustrates exemplary thermal infrared pictures in which there is no leakage, when comparing the temperature change difference between different areas of the monitored roof.
FIG. 5 illustrates exemplary thermal infrared pictures in which there is a leakage, and the temperature variation is a temperature change difference between different areas of the monitored roof.

### Detailed description of the invention

In a preferred embodiment, the step of acquiring satellite-based thermal infrared pictures comprises a step of selecting a high resolution infrared satellite. The satellite may image pictures with resolution 50m x 50m for one pixel, preferably 20m x 20m for one pixel, and more preferably 10m x 10m for one pixel. Using the satellite-based thermal infrared pictures im-aged by high resolution infrared satellite, the accuracy of the detection is further secured.

In a preferred embodiment, the step of evaluating the satellite-based thermal infrared pictures is performed based on a temperature variation shown in the pictures.

In the above embodiment, the temperature variation may be a temperature difference between different areas of the monitored roof in one picture or a temperature change difference between different areas of the monitored roof in pictures acquired at different time. This embodiment provides the flexibility of evaluating the satellite-based thermal infrared pictures.

In a further preferred embodiment, the selected surveyance time may be a cooling period of a day, preferably during dusk, in particular, a period after sunset. The selected the selected surveyance time may also be a heating period of a day, preferably during dawn, in particular, a period after sun-rise. During these periods, the temperature changes distinctively and render the difference between roof areas with moisture and normal areas more obvious, so that the accuracy of the detection is further secured.

In another preferred embodiment, the steps for leak detection are repeated regularly, preferably every year, more preferably every six months and most preferably every month. The corresponding effect is that a leak can be detected in time.

In another preferred embodiment, the satellite-based thermal infrared pictures are provided by public infrared satellite sources, in particular, Sky-Watch, LAND INFO, Sentinel Hub, and preferably NASA satellite network. The corresponding effect is that costs are further reduced.

In a further preferred embodiment, the satellite-based thermal infrared pictures are imaged in a spectral range of 900-1400 nm. Within this spectral range, the thermal infrared pictures are more suitable for leak detection of a roof.

In another preferred embodiment, the steps for leak detection are per-formed automatically using a computer with internet access. The corresponding effect is that the effort for leak detection is further reduced.

The invention is explained in more detail below with reference to the accompanying schematic drawings. The embodiments shown are examples of how the leak detection method according to the invention can be carried out.

In the following description, the figures are described in detail.

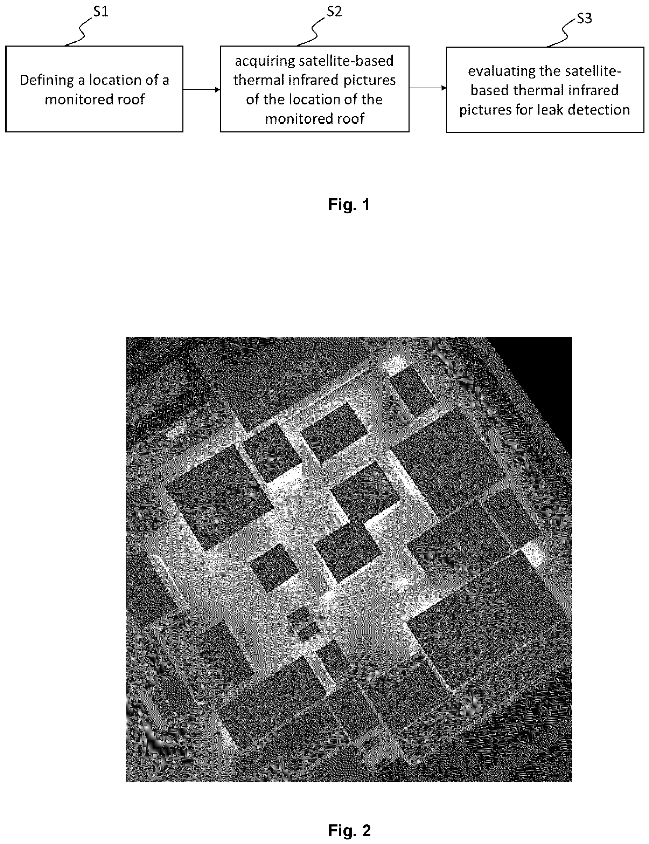

FIG. 1 is a flow chart showing an overview of leak detection method according to a preferred embodiment of the invention. In step S1, a location of a monitored roof is defined, which is to be used to acquire the corresponding satellite-based thermal infrared pictures. Normally, the address of the building, of which the roof is monitored is enough to acquire the corresponding satellite-based thermal infrared pictures. If the GPS-data (GPS-coordinates) is necessary, the GPS-data may be converted from the known address from the internet, for example via google maps.

In step S2, the satellite-based thermal infrared pictures of the location of the monitored roof are acquired. Such satellite-based thermal infrared pictures may be provided by public infrared satellite sources, in particular, SkyWatch, LAND INFO, Sentinel Hub, and preferably NASA satellite network. The sources are not restricted by this embodiment. Any other source may be used, as long as the desired thermal infrared pictures can be acquired based on the location of the monitored roof. The thermal infrared pictures may be imaged at a selected surveyance time.

Step S2 may further comprises a step of selecting a high resolution infrared satellite before acquiring the satellite-based thermal infrared picture. The satellite may image pictures with resolution 50mx50m for one pixel, prefer-ably 20m x 20m for one pixel, and more preferably 10m x 10m for one pixel. Using the satellite-based thermal infrared pictures imaged by high resolution infrared satellite, the accuracy of the detection is further secured.

In step S3, the satellite-based thermal infrared pictures are evaluated for leak detection. When there is a leak, it often causes temperature difference due to the different thermal properties of roof material and leaked gas and/or liquid. For example, a wet insulation is cooler than dry areas during the day because water warms up slower than the roof material. Accordingly, evaluating the satellite-based thermal infrared pictures may be performed based on a temperature variation shown in the pictures.

The temperature variation may be a temperature difference between different areas of the monitored roof in one picture. In one picture, the different areas of roof made of same material should be almost at the same temperature. When one area has a temperature, which is different from the temperature of other areas, the area with a different temperature probably has a leakage. The temperature may be reflected by the brightness and/or color in pictures. The temperature may be also represented directly by a value. This embodiment does not limit the possibility of showing temperature, as long as the temperature difference of normal areas and leaked areas can be presented.

The temperature variation may be a temperature change difference between different areas of the monitored roof in pictures acquired at different time. In the same roof, the temperature change of different areas in different pictures should be almost same. When one area has a temperature change in different pictures, which is considerably different from the temperature change of other areas, the area with a considerable temperature change difference probably has a leakage. The temperature change difference may be reflected by different brightness and/or different color in pictures. The temperature change difference may be also represented directly by different values. This embodiment does not limit the possibility of showing temperature change difference, as long as the temperature change difference of normal areas and leaked areas can be presented.

The selected surveyance time in step S2 may be a cooling period of a day, preferably during dusk, in particular, a period after sunset. The selected surveyance time in step S2 may also be a heating period of a day, preferably during dawn, in particular, a period after sunrise. During these periods, the temperature changes distinctively (either cooler or warmer) and render the difference between roof areas with moisture and normal areas more obvious, so that the accuracy of the detection is further secured.

The satellite-based thermal infrared pictures may be imaged in a spectral range of 900-1400 nm. This range is within the near-infrared region (NIR) of the electromagnetic spectrum. The lower absorption allows NIR radiation to penetrate much further into a sample than mid infrared radiation, which renders this method suitable for leak detection of a roof.

Since a roof leak might happen at any time, the steps S1-S3 for leak detection may be repeated regularly, preferably every year, more preferably every six months and most preferably every month, so that a leak can be detected in time.

The steps S1-S3 for leak detection may be performed automatically using a computer with internet access. Once the location of the monitored roof is defined, steps S2 and S3 can be implemented by codes and/or programs in a computer with internet access. The location of the monitored roof needs to be defined only one time. The method may be performed with the defined location automatically.

As examples, thermal infrared pictures that may be used for roof leakage detection shown in FIG. 2-4. In these pictures, a rainbow color scale is utilized, where blue represents cooler temperatures and red represents hotter temperatures. When acquiring thermal infrared pictures, the monitored roof and the available resource of thermal infrared pictures have to be taken account. The thermal infrared pictures to achieve the present invention are not restricted by FIG. 2-4.

FIG.2 illustrates an illustrates an exemplary thermal infrared picture in which there is no leakage in the monitored roof. It can be seen from FIG.2, there is a consistent temperature distribution, which indicates uniform insulation and no significant leakage.

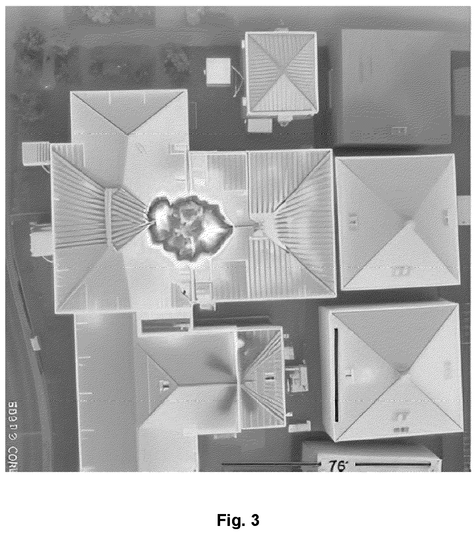

FIG. 3 illustrates an exemplary thermal infrared picture in which there is a leakage, and temperature variation is a temperature difference between different areas of the monitored roof in one picture.

Picture in FIG.3 may be taken during a cooling period. Since the area with moisture has a higher specific heat capacity than dry materials, a wet spot on the roof shows up warmer in infrared images during a cooling period, which is a sign of a leakage. FIG.3 shows an uneven temperature distribution in a roof, where most areas of the roof are light blue (cold) but the color of the hot area changes gradually from red to orange to yellow from the center to the periphery. Therefore, there probably be a leakage in the hot spot in the picture of FIG.3.

The leakage is reflected in FIG.3 by a hot spot. The invention is not limited therein. Cold spot may also indicate a leakage, since the higher specific heat capacity of the area with moisture may lead to a cold spot during a heating period. For example, during a heating period, the other normal areas of the monitored roof are hot and the area with leakage is a cold spot.

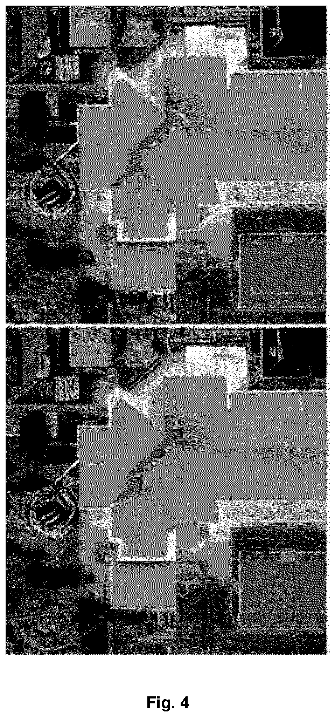

FIG. 4 illustrates exemplary thermal infrared pictures in which there is no leakage, when comparing the temperature change difference between different areas of the monitored roof.

FIG.4 (a) and (b) are pictures, which may be taken during a heating period of a day and on different days. FIG 4(a) and (b) both show a consistent temperature distribution. The temperature change of different areas on the roof is almost same. I.e. there is no significant temperature change difference between different areas of the monitored roof. Therefore, FIG.4 (a) and (b) indicate there is no leakage in the monitored roof.

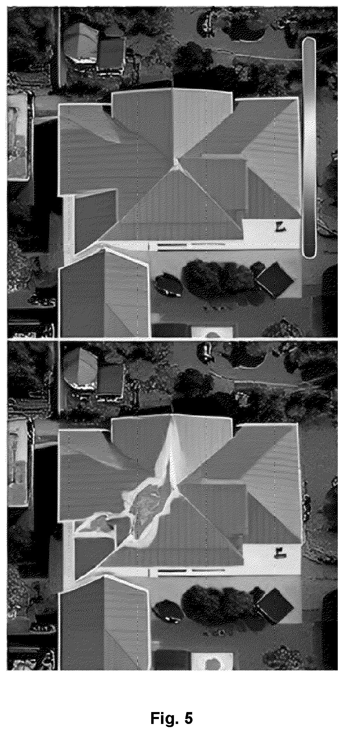

FIG. 5 illustrates exemplary thermal infrared pictures in which there is a leakage, and the temperature variation is a temperature change difference between different areas of the monitored roof.

FIG.5 (a) and (b) are pictures, which may be taken during a cooling period on different days. In the pictures, most of the areas on the roof do not have a significant temperature change. However, there is a hot spot in FIG.5 (b), which is a cold area in FIG.5 (a). The hot spot has a significant temperature change, while the temperature change of other areas is almost zero, which means there is a considerable temperature change difference between different areas of the monitored roof and there probably be a leakage in the hot spot.

The temperature change difference is not limited by FIG.5. If one area had a considerable temperature change difference than the other areas, it would indicate a leakage. For example, in contrast with FIG,5, most of the areas on the roof have a significant change but the temperature change of one area is almost zero or much smaller than other areas, there would also probably be a leakage.

The leakage detection by comparing temperature change of different areas is not limited by FIG.5. The pictures might be taken during different periods on the same day or different days. In this case, after detection of the leakage, the location of leakage area shall be determined considering the surveyance time, and the leakage area is not necessarily the area with the considerable temperature change difference. For example, if two pictures are taken during cooling and heating periods respectively. Most areas however do not show a significant temperature change except one area, which is a hot spot in the picture taken during heating period and is a cold spot in the picture taken during cooling period. Most areas in this case may be with leakage except the area showing a significant temperature change in different picture.

The features of the above embodiments are disclosed as isolated feature as well as combined features and are claimed as far as novel.

## Claims

1. A method for leak detection on roofs of a building, comprising the following steps:
- defining a location of a monitored roof;
- acquiring satellite-based thermal infrared pictures of the location of the monitored roof at a selected surveyance time;
- evaluating the satellite-based thermal infrared pictures for leak detection.

2. The method according to claim 1, wherein the step of acquiring satellite-based thermal infrared pictures comprises selecting a high resolution infrared satellite, wherein the high resolution infrared satellite images pictures with resolution 50m x 50m for one pixel, preferably 20m x 20m for one pixel, and more preferably 10m x 10m for one pixel.

3. The method according to claim 1 or claim 2, wherein the step of evaluating the satellite-based thermal infrared pictures is performed based on a temperature variation shown in the pictures.

4. The method according to claim 3, wherein the temperature variation is a temperature difference between different areas of the monitored roof in one picture.

5. The method according to claim 3, wherein the temperature variation is a temperature change difference between different areas of the monitored roof in pictures acquired at different time.

6. The method according to any one of claims 1-5, wherein the selected surveyance time is a cooling period of a day, preferably during dusk, in particular, a period after sunset.

7. The method according to any one of claims 1-5, wherein the selected surveyance time is a heating period of a day, preferably during dawn, in particular, a period after sunrise.

8. The method according to any one of claims 1-7, wherein the steps for leak detection are repeated regularly, preferably every year, more preferably every six months and most preferably every month.

9. The method according to any one of claims 1-8, wherein the satellite-based thermal infrared pictures are provided by public infrared satellite sources, in particular, SkyWatch, LAND INFO, Sentinel Hub, and preferably NASA satellite network.

10. The method according to any one of claims 1-9, wherein the satellite-based thermal infrared pictures are imaged in a spectral range of 900-1400 nm.

11. The method according to any one of claims 1-10, wherein steps for leak detection are performed automatically using a computer with internet access.
